# FASCICULE DE BREVET EUROPEEN

(11) **EP 0 936 823 B1**
(45) Date de publication et mention de la délivrance du brevet: **22.10.2003**
(21) Numéro de dépôt: 99400251.7
(22) Date de dépôt: 04.02.1999
(51) Int. Cl.: H04Q 3/68

(54) **Réseau de commutateurs pour installations à canaux multiples**
Vermittlungsnetzwerk für Mehrkanalverbindungseinrichtungen
Switching network for multichannel equipment

(30) Priorité: 05.02.1998 FR 9801338
(43) Date de publication de la demande: 18.08.1999
(73) Titulaire: ALCATEL, 75008 Paris (FR)
(72) Inventeur: Robichez, Sabine, 31400 Toulouse (FR)
(74) Mandataire: Lamoureux, Bernard

(56) Documents cités:
- EP-A- 0 211 541
- EP-A- 0 599 734
- EP-A- 0 690 636
- EP-A- 0 749 174
- DE-A- 2 538 656
- FR-A- 2 752 497

## Description

La présente invention concerne un réseau de commutateurs pour installations à canaux multiples, telles que celles que l'on trouve dans les satellites de télécommunications, entre, par exemple, les accès d'antenne et les amplificateurs.

De tels réseaux doivent permettre des connexions chacune entre l'un de N accès d'entrée (accès d'antenne, selon l'exemple considéré) et l'un de T accès de sortie (accès d'amplificateurs, toujours selon l'exemple considéré).

Le réseau doit plus précisément permettre P telles connexions, avec P inférieur ou égal tant à N qu'à T. En effet, il peut y avoir redondance, dans la construction du satellite, tant du côté des antennes que du côté des amplificateurs. Dans la détermination des P connexions établies chacune entre un des éléments d'un ensemble constitué de P parmi N accès d'entrée et un des éléments d'un ensemble constitué de P parmi T accès de sortie, il suffit que les P accès d'entrée soient tous connectés, chacun à l'un différent des P accès de sortie. Si l'un de P accès de sortie doit être remplacé par un autre des T-P accès de sortie jusque là non utilisé, le réseau de commutateurs doit être arrangé et commandé de manière qu'un nombre limité de connexions établies soient modifiées.

On connaît de nombreux réseaux de commutateurs répondant à ces exigences, et l'on citera à titre d'exemple ceux du document de brevet EP-0599734-A1, qui sont construits à l'aide de commutateurs élémentaires de type quadrupolaire, ayant deux accès opposés connectables soit l'un à l'autre, soit chacun à un accès adjacent de droite, soit chacun à un accès adjacent de gauche. Dans de tels réseaux, ces commutateurs élémentaires sont relativement nombreux. Individuellement, de par la technologie employée, ils sont lourds et encombrants.

L'invention, part de commutateurs de technologie différente, illustrée par les documents de brevet EP-0670579-A1 et EP-0211541-A2. Le commutateur du premier de ces deux documents comprend deux bornes entre lesquelles est disposée une pièce de contact mobile mue par un électro-aimant. Le commutateur du second document comprend une borne centrale entourée d'un cercle de bornes radiales, une pièce de contact étant prévue entre la borne centrale et chacune des bornes radiales. On pourrait constituer avec de tels commutateurs des réseaux tels que celui du document EP-0599734-A1 mentionné précédemment. Les avantages et les restrictions, résultant du changement de technologie en seraient obtenus, mais subsisteraient les inconvénients résultant directement du nombre relativement élevé des commutateurs élémentaires dans un réseau caractérisé par des nombres N/P/T donnés.

L'invention vise une solution réduisant de façon sensible les inconvénients subsistants que l'on vient de mentionner, c'est-à-dire un réseau de commutateurs comprenant un arrangement de commutateurs élémentaires permettant des connexions monodirectionnelles, chacune d'elles entre l'un de N accès d'entrée et l'un de T accès de sortie, caractérisé, selon l'invention, en ce que chacun desdits commutateurs élémentaires comprend au moins une première borne, à laquelle est connectée un premier accès d'un premier type (un accès d'entrée, par exemple), une deuxième, à laquelle est connectée un deuxième accès d'un deuxième type (de sortie, dans l'exemple choisi), et un pont de contact direct pourvu d'un dispositif d'actionnement qui permette sur commande une connexion directe entre lesdites première et deuxième bornes et en ce que ledit réseau comprend une pluralité de bornes de réseau, chacune des bornes de réseau correspond à une dite première borne constituant au moins une dite première borne pour un premier commutateur élémentaire dudit réseau et une dite première borne pour un deuxième commutateur élémentaire dudit réseau.

De préférence, ladite pluralité de bornes de réseau comprend un arrangement matriciel à chacun des noeuds duquel est disposé une desdites bornes.

Selon une variante, ladite pluralité de bornes de réseau comprend au moins deux arrangements matriciels à chacun des noeuds de chacun desquels est disposé une desdites bornes, des bornes de réseau d'un de ces arrangements étant interconnectées à des bornes de réseau d'un autre de ces arrangements.

Les différents objets et caractéristiques de l'invention apparaîtront plus clairement à la lumière de la description qui va suivre d'exemples de réalisation de l'invention, faite en se référant aux figures annexées qui représentent :
- la figure 1, une représentation simplifiée d'un commutateur élémentaire connu dont est dérivé le réseau de commutateurs de la présente invention,
- la figure 2, une première forme de réalisation du réseau de commutateurs selon l'invention,
- la figure 3, une deuxième forme de réalisation du réseau de commutateurs selon l'invention,
- la figure 4, une troisième forme de réalisation du réseau de commutateurs selon l'invention,
- la figure 5, une quatrième forme de réalisation du réseau de commutateurs selon l'invention.

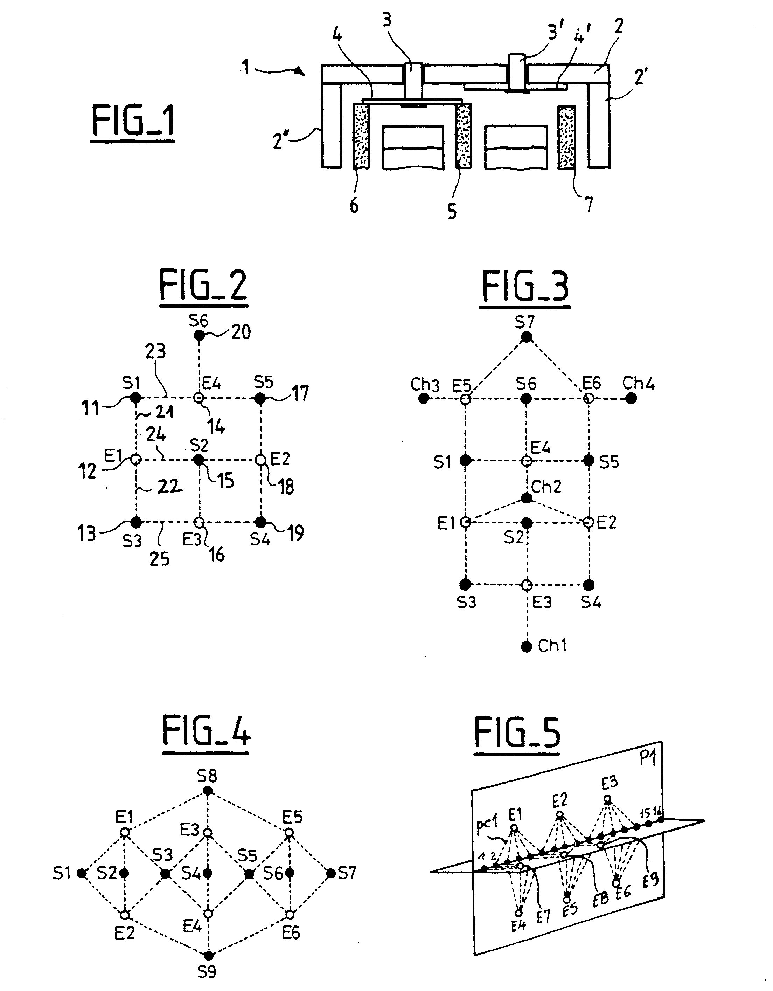

Le commutateur élémentaire connu de la figure 1 est schématiquement représenté en 1. Il est, par exemple une version du commutateur du document EP-0211541-A2 réduit à deux bornes radiales seulement ; il comprend essentiellement une enceinte close aux rayonnements électromagnétique 2, 2', 2", traversée en certains endroits par des poussoirs 3, 3' actionnant des ponts de contact 4, 4' lesquels prennent appui sur des bornes de réseau 5, 6, 7. Bien entendu, ladite enceinte se referme sur des prolongements desdites bornes de réseau, par des parties d'enceinte non représentées.

Si l'on suppose que la borne de réseau 5 est connectée à un accès d'entrée d'un réseau constitué comme on le verra par la suite et comprenant le commutateur de la figure 1, les bornes 6 et 7 sont, elles, connectées à des accès de sortie de ce réseau et le commutateur considéré permet de connecter l'accès d'entrée connecté à la borne 5 à l'accès de sortie connecté à la borne 6, puisque l'on voit que le pont de contact 4 est abaissé par le poussoir 3. Dans un autre cas de configuration du réseau comprenant le commutateur 1, le pont de contact 4' peut connecter la borne d'accès d'entrée 5 à la borne d'accès de sortie 7, au lieu de la borne d'accès de sortie 6.

La figure 2 représente un exemple de réseau de commutateurs conforme à l'invention constitué à partir de commutateurs tels que ceux que l'on vient de décrire en se référant à la figure 1 et aux documents précédemment mentionnés. On remarquera toutefois que l'invention n'est pas limitée à ce mode de réalisation et que les réseaux décrits ci-après en se référant aux figures 2 à 5 pourraient tout aussi bien être constitués à partir de commutateurs élémentaires de technologie différentes, des commutateurs électroniques à semi-conducteur par exemple, du moment qu'ils comprennent des bornes et des ponts de contact et sont fonctionnellement équivalents au commutateur de la figure 1.

En revenant à la figure 2, des bornes de réseau 11 à 20 sont représentées par des cercles soit blancs, quand la borne E1, E4, E3, E2 est connectée à un accès d'entrée, soit noirs quand la borne, S1, S3, S2, S5, S4, S6, est connectée à un accès de sortie. Ces bornes sont disposées dans un arrangement matriciel à chacun des noeuds duquel est disposé l'une d'entre elles. Les ponts de contact tels que 21 à 25 connectent chacun, lorsqu'ils sont actionnés, c'est-à-dire abaissés, comme c'est le cas du pont de contact 4 de la figure 1, une borne d'un accès d'entrée à une borne d'un accès de sortie, E1-S1, E1-S3, E4-S1, E1-S2, E3-S3, etc. Ces ponts de contact sont représentés par des traits pointillés ; d'autres que ceux que l'on vient de mentionner sont également représentés, bien que non référencés pour simplifier. Comme on le voit sur la figure 2, le réseau constitué conformément à l'invention comprend 4 bornes d'accès d'entrée E1 à E4 et 6 bornes d'accès de sortie S1 à S6. Chaque borne d'accès d'entrée E1 à E4 accède à trois bornes bornes d'accès de sortie. Ce réseau est prévu pour établir quatre connexions. Cela signifie que deux bornes d'accès de sortie seront exclues de ces quatre connexions. Comme chaque borne d'accès d'entrée accès à trois bornes d'accès de sortie, chaque borne d'accès d'entrée peut toujours être connectée à une borne d'accès de sortie. Par exemple, dans un des cas les plus défavorables, où les bornes d'accès de sortie S1 et S2 sont exclues, les connexions suivantes restent possibles : E1-S3, E3-S4, E2-S5, E4-S6.

La figure 3 représente un réseau de commutateurs semblable à celui de la figure 2, et dans lequel les mêmes éléments conservent les mêmes références, tout au moins en ce qui concerne les bornes d'accès d'entrée et les bornes d'accès de sortie. Plus grand que le précédent, ce réseau comprend des entrées E1 à E6 connectables à des sorties S1 à S7, et il est agencé de manière que puissent être établies cinq connexions. Comme chaque borne d'entrée est au moins connectée à trois bornes de sorties, comme dans le cas de la figure 2, cela ne pose aucun problème. De plus ce réseau comprend des charges Ch1, Ch2, Ch3, Ch4. Une borne d'entrée qui n'est pas connectée à une borne de sortie (il y en a toujours une) doit être connectée à une charge. Les bornes d'entrée E3, E5, E6 sont ainsi individuellement connectables aux charges Ch1, Ch3, Ch4. Les bornes d'entrées E1, E2, E4 sont individuellement connectables à une charge Ch2. Il est clair que les entrées E3, E5, E6 auraient pu de même se partager une charge commune.

Construit de la même manière que les précédents, le réseau de la figure 4 comprend des entréee E1 à E6 et des sorties S1 à S9. Il est prévu pour établir 6 connexions. Comme chaque entrée peut accèder à quatre sorties, telle El-S1/S2/S3/S8 ou E4-S3/S4/S5/S9, l'exclusion de trois sorties, on peut le vérifier aisément, n'empêche pas chaque entrée de pouvoir être individuellement connectée à une sortie.

Le réseau de la figure 5 est construit d'une façon similaire à ceux des figures 3 et 4, mais les bornes du réseau de commutateurs sont arrangées selon un réseau à plus de deux dimensions. En effet, dans un plan P1, des entrée E1 à E6 sont connectables par des ponts de contact tels que pc1 à des sorties parmi un ensemble de 16 sorties S1 à S16. Par exemple, l'entrée E1 est connectable aux sorties S2 à S6, l'entrée E2 est connectable à des sorties S6 à S10, et les autres entrées du plan P1 sont de même connectées chacun à un groupe de 5 sorties. De façon similaire, des entrées E7 à E12, dans un plan P2, dont seules les entrée E7 à E9 sont visibles, sont également chacun connectée à un groupe de 5 sorties. La distribution des sorties sur les entrées vise à ce que chaque sortie soit connectable à un nombre limité d'entrées, ce qui réduit au minimum le nombre de bornes du réseau qui comprend ainsi 12 bornes d'accès d'entrée, 16 bornes d'accès de sortie et, au maximum 60 ponts de contact (12 entrées, fois 5 ponts par entrée).

Du point de vue de la construction des réseaux représentés, à partir du type de commutateur illustré par le figure 1, il est clair que les réseaux bidimensionnels, tels que ceux des figures 2 à 5 peuvent être réalisés sous la forme d'une structure intégrée dans laquelle les bornes sont disposées en certains noeuds d'une grille matricielle. La conséquence est que certains ponts de contact (E5-S7, par exemple, fig. 3, ou E1-S8, fig.4) auront une longueur différente. On peut bien sûr faire en sorte que le nombre de longueurs différentes de pont de contact soit minimal et que la construction du réseau de commutateurs soit modulaire, de sorte que cela ne constitue pas un réel inconvénient.

Dans le cas du réseau de commutateurs de la figure 5, la construction demandera deux plans, chacun semblable à ceux que l'on vient de décrire, dont les bornes communes de même rang (S1 à S16) seront respectivement connectées l'une à l'autre. Plus généralement, l'invention concerne de tels réseaux comprenant au moins deux arrangements matriciels à chacun des noeuds de chacun desquels est disposé une desdites bornes, des bornes de réseau d'un de ces arrangements étant interconnectées à des bornes de réseau d'un autre de ces arrangements.

## Revendications

1. Réseau de commutateurs permettant des connexions monodirectionnelles, chacune d'elles entre l'un de N accès d'entrée et l'un de T accès de sortie, ledit réseau comprenant un arrangement de commutateurs élémentaires, chacun desdits commutateurs élémentaires comprenant au moins une première borne (E1), à laquelle est connectée un premier accès d'un premier type, une deuxième borne (S2), à laquelle est connectée un deuxième accès d'un deuxième type, **caractérisé en ce que** chacun desdits commutateurs élémentaires comprend en outre un pont de contact direct (4, 4', 21, 22, 23, 24) pourvu d'un dispositif d'actionnement (3, 3') qui permette sur commande une connexion directe entre lesdites première et deuxième bornes et **en ce que** ledit réseau comprend une pluralité de bornes de réseau, chacune des bornes de réseau correspondant à une dite première borne constituant au moins une dite première borne (E1) pour un premier commutateur élémentaire (E1, 22, S3) dudit réseau et une dite première borne pour un deuxième commutateur élémentaire dudit réseau (E1, 21, S1).

2. Réseau de commutateurs conforme à la revendication 1, **caractérisé en ce que** ladite pluralité de bornes de réseau comprend un arrangement matriciel à chacun des noeuds duquel est disposé une desdites bornes.

3. Réseau de commutateurs conforme à la revendication 2, **caractérisé en ce que** ladite pluralité de bornes de réseau comprend au moins deux arrangements matriciels à chacun des noeuds de chacun desquels est disposé une desdites bornes, des bornes de réseau d'un de ces arrangements étant interconnectées à des bornes de réseau d'un autre de ces arrangements.

## Patentansprüche

1. Vermittlungsnetzwerk zur Herstellung monodirektionaler Verbindungen, von denen jede zwischen einem von N Eingangsanschlüssen und einem von T Ausgangsanschlüssen besteht, wobei das Netzwerk eine Anordnung von Elementarschaltern aufweist und wobei jeder dieser Elementarschalter mindestens eine erste Klemme (E1) aufweist, mit der ein erster Anschluss eines ersten Typs verbunden ist, sowie eine zweite Klemme (S2), mit der ein zweiter Anschluss eines zweiten Typs verbunden ist, **dadurch gekennzeichnet, dass** jeder der genannten Elementarschalter außerdem eine Direktkontaktbrücke (4, 4', 21, 22, 23, 24) aufweist, die mit einer Betätigungsvorrichtung (3, 3') versehen ist, welche bei Betätigung eine direkte Verbindung zwischen der ersten und der zweiten Klemme ermöglicht; und **dadurch gekennzeichnet, dass** das Netzwerk eine Vielzahl von Netzwerkklemmen aufweist, wobei jede der Netzwerkklemmen, die einer sogenannten ersten Klemme entspricht, mindestens eine sogenannte erste Klemme (E1) für einen ersten Elementarschalter (E1, 22, S3) des Netzwerks und eine sogenannte erste Klemme für einen zweiten Elementarschalter des Netzwerks (E1, 21, S1) bildet.

2. Vermittlungsnetzwerk nach Anspruch 1, **dadurch gekennzeichnet, dass** die Vielzahl von Netzwerkklemmen eine Matrixanordnung aufweist, wobei in jedem ihrer Knoten eine der genannten Klemmen angeordnet ist.

3. Vermittlungsnetzwerk nach Anspruch 2, **dadurch gekennzeichnet, dass** die Vielzahl von Netzwerkklemmen mindestens zwei Matrixanordnungen aufweist, wobei in jedem der Knoten jeder dieser Anordnungen eine der genannten Klemmen angeordnet ist und wobei Netzwerkklemmen von einer dieser Anordnungen mit Netzwerkklemmen einer anderen dieser Anordnungen verbunden sind.

## Claims

1. A network of switches providing one-way connections, each between one of N input ports and one of T output ports, said network comprising an arrangement of individual switches, each of said individual switches comprising at least one first terminal (E1) to which is connected a first port of a first type and one second terminal (S2) to which is connected a second port of a second type, which network is **characterized in that** each of said individual switches further comprises a direct contact bridge (4, 4', 21, 22, 23, 24) provided with an actuator device (3, 3') which on command makes a direct connection between said first and second terminals and **in that** said network comprises a plurality of network terminals each corresponding to one of said first terminals constituting at least one of said first terminals (E1) for a first individual switch (E1, 22, S3) of said network and one of said first terminals for a second individual switch of said network (E1, 21, S1).

2. A network of switches according to claim 1, **characterized in that** said plurality of network terminals comprises a matrix arrangement at each node of which one of said terminals is disposed.

3. A network of switches according to claim 2, **characterized in that** said plurality of network terminals comprises at least two matrix arrangements at each of the nodes of each of which one of said terminals is disposed, the network terminals of one of said arrangements being interconnected to the network terminals of another of said arrangements.
